# EUROPEAN PATENT APPLICATION

(11) **EP 4 744 942 A1**
(43) Date of publication of application: **20.05.2026**
(21) Application number: 25210052.4
(22) Date of filing: 21.10.2025
(51) Int. Cl.: B60L 50/60, B60L 53/20, B60L 53/22, B60K 1/00, B60K 1/04

(54) **VEHICLE**

(30) Priority: 18.11.2024 JP 2024200560
(71) Applicant: TOYOTA JIDOSHA KABUSHIKI KAISHA, Toyota-shi, Aichi-ken 471-8571 (JP)
(72) Inventor: KOBAYASHI, Jin, Toyota-shi, 471-8571 (JP)
(74) Representative: D Young & Co LLP

(57) **Abstract**

A vehicle (1) includes: a floor panel (300); a seat cushion (81) disposed above the floor panel (300); a high-voltage unit (20) excluding a battery (30); a high-voltage connector (23) provided on the high-voltage unit (20); and a harness (50). The high-voltage unit (20) has at least a part disposed between the seat cushion (81) and the floor panel (300). The high-voltage connector (23) is provided on a lower surface side of the high-voltage unit (20). The harness (50) extends toward a gap between the high-voltage unit (20) and the floor panel (300) to be connected to the high-voltage connector (23).

## Description

### BACKGROUND OF THE INVENTION

### 1. Field of the Invention

This disclosure relates to a vehicle.

### 2. Description of Related Art

In Japanese Unexamined Patent Application Publication No. 2021-126915 (JP 2021-126915 A), a step portion is formed in a part of a floor panel positioned below a vehicle seat, and a first electric power distribution unit and a second electric power distribution unit are respectively disposed outside and inside of a vehicle cabin across a vertical wall surface configuring a part of the step portion. The second electric power distribution unit is disposed below the vehicle seat, and is electrically connected to the first electric power distribution unit from a lateral surface side of the second electric power distribution unit by a harness passing through the vertical wall surface. In the vehicle cabin, the second electric power distribution unit is covered with a cover member that blocks electromagnetic waves.

### SUMMARY OF THE INVENTION

As described in JP 2021-126915 A, when the cover member covering the second electric power distribution unit serving as a high-voltage unit is installed below the vehicle seat, in order to ensure a space in which the cover member is installed, the space is enlarged.

Meanwhile, electromagnetic waves easily leak from a connection portion between the harness and the high-voltage unit, and hence, simply by omitting the cover member, there is a possibility of leakage of electromagnetic waves to a seat cushion side from the lateral surface side of the high-voltage unit to which the harness is connected.

This disclosure provides a vehicle that reduces leakage of electromagnetic waves to a seat cushion side while preventing enlargement of a space.

A vehicle according to an aspect of this disclosure includes: a floor panel; a seat cushion disposed above the floor panel; a high-voltage unit excluding a battery; a high-voltage connector provided on the high-voltage unit; and a harness. The high-voltage unit has at least a part disposed between the seat cushion and the floor panel. The high-voltage connector is provided on a lower surface side of the high-voltage unit. The harness extends toward a gap between the high-voltage unit and the floor panel to be connected to the high-voltage connector.

With the above-mentioned configuration, the high-voltage connector is provided on the lower surface side of the high-voltage unit, and hence, even when electromagnetic waves leak from the high-voltage connector, the electromagnetic waves can be blocked by the high-voltage unit itself. Further, the high-voltage connector is provided on the lower surface side of the high-voltage unit separate from the seat cushion, and hence a space distance between an occupant siting on the seat cushion and the high-voltage connector can be ensured.

Moreover, with the high-voltage connector being disposed as described above, the influence of the electromagnetic waves can be reduced, and hence a blocking member that blocks the electromagnetic waves can be omitted between the seat cushion and the high-voltage unit. This makes it possible to prevent enlargement of a space for installing a member.

In the vehicle according to the aspect of this disclosure, the high-voltage unit may be a charger or an inverter.

With the above-mentioned configuration, in the configuration in which the high-voltage unit is configured of a charger or an inverter, the leakage of the electromagnetic waves to the seat cushion side can be reduced while the enlargement of the space is prevented.

In the vehicle according to the aspect of this disclosure, the floor panel may have a hole portion provided in a region overlapping the high-voltage connector in an up-down direction. In this case, the vehicle may further include a sealing member that seals the hole portion.

With the above-mentioned configuration, when the gap between the high-voltage unit and the floor panel is narrow and it is difficult to put a hand in the gap, the hand can be put into the gap from the hole portion provided in the floor panel, and thus the high-voltage connector and the harness can be reliably connected. Further, with the hole portion being sealed with the sealing member, it is possible to reduce entry of foreign matters or liquid such as water from the hole portion into the vehicle cabin.

In the vehicle according to the aspect of this disclosure, the high-voltage connector may include an insertion portion to which the harness is to be inserted. The insertion portion may be directed in a direction orthogonal to the up-down direction.

With the above-mentioned configuration, below the high-voltage unit, a distal end side of the harness can be brought to a state of being inserted to the insertion portion of the high-voltage connector in a state along the floor panel.

In the vehicle according to the aspect of this disclosure, the high-voltage connector may include an insertion portion to which the harness is to be inserted. The insertion portion may be directed downward.

With the above-mentioned configuration, below the high-voltage unit, the distal end side of the harness can be brought to a state of being inserted to the insertion portion of the high-voltage connector in a state directed upward.

In the vehicle according to the aspect of this disclosure, the harness may include a first extension portion extending along the floor panel below the high-voltage unit, and a second extension portion extending from the first extension portion upward toward the insertion portion.

With the above-mentioned configuration, the harness can be connected to the high-voltage connector in a state in which a posture is changed such that the distal end side of the harness is directed upward.

In the vehicle according to the aspect of this disclosure, the vehicle may further include a posture support member that stabilizes a posture of the second extension portion.

With the above-mentioned configuration, the posture of the second extension portion of the harness can be stabilized by the posture support member.

In the vehicle according to the aspect of this disclosure, a leg portion may be provided on the lower surface of the high-voltage unit. The leg portion may come into contact with the floor panel in a state of protruding downward of the high-voltage connector.

With the above-mentioned configuration, with the leg portion protruding downward of the high-voltage connector, the high-voltage connector can come into contact with the floor panel. This makes it possible to protect the high-voltage connector.

The vehicle according to the aspect of this disclosure may further include a member electrically connected to the high-voltage unit by the harness. The harness may have a relay connector provided at a position not overlapping the high-voltage unit, the relay connector being configured to separate a part positioned on the high-voltage unit side and a part positioned on the member side.

With the above-mentioned configuration, the relay connector can be removed to separate the part of the harness positioned on the high-voltage unit side and the part thereof positioned on the member side. This makes it possible to integrally remove the high-voltage unit, the high-voltage connector, and a part of the harness positioned on the high-voltage unit side.

The vehicle according to the aspect of this disclosure may further include the battery. The seat cushion may further include a front-side seat cushion and a rear-side seat cushion. The battery may be disposed below the front-side seat cushion. The high-voltage unit may be disposed between the rear-side seat cushion and the floor panel.

Even in a disposition relationship between the battery and the high-voltage unit as described above, with the high-voltage unit being disposed between the rear-side seat cushion and the floor panel and the high-voltage connector being provided on the lower surface side of the high-voltage unit, the leakage of the electromagnetic waves to the seat cushion side can be reduced while the enlargement of the space is prevented.

With this disclosure, it is possible to provide the vehicle that reduces leakage of the electromagnetic waves to the seat cushion side while preventing enlargement of the space.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a schematic view of a vehicle according to Embodiment 1;
FIG. 2 is a view illustrating a configuration around a charger in the vehicle according to Embodiment 1;
FIG. 3 is a view illustrating a configuration around a charger in a vehicle according to Embodiment 2;
FIG. 4 is a view illustrating a configuration around a charger in a vehicle according to Embodiment 3;
FIG. 5 is a view illustrating a configuration around a charger in a vehicle according to Embodiment 4;
FIG. 6 is a view illustrating a configuration around a charger in a vehicle according to Embodiment 5;
FIG. 7 is a view illustrating a configuration around a charger in a vehicle according to Embodiment 6; and
FIG. 8 is a schematic view of a vehicle according to Embodiment 7.

### DETAILED DESCRIPTION OF EMBODIMENTS

Embodiments of this disclosure will be described in detail below with reference to the drawings. In the embodiments to be shown below, parts that are the same or shared will be denoted by the same reference sign in the drawings and description thereof will not be repeated.

### Embodiment 1

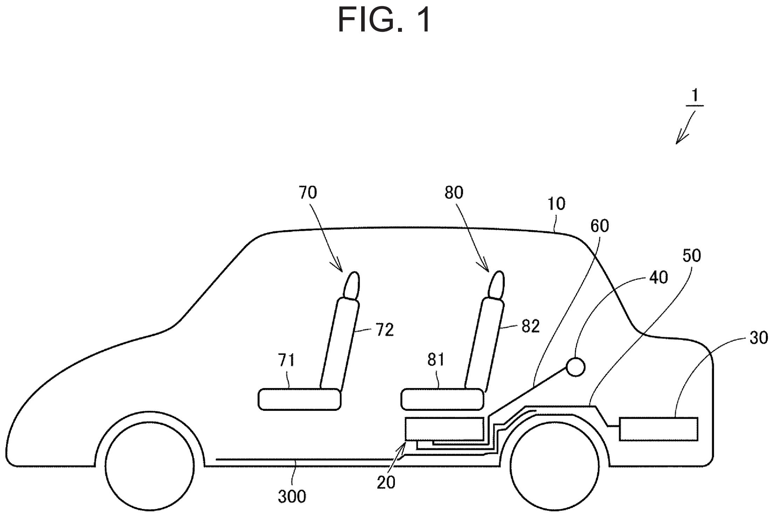

FIG. 1 is a schematic view of a vehicle according to Embodiment 1. A vehicle 1 according to Embodiment 1 will be described with reference to FIG. 1.

The vehicle 1 is a hybrid electric vehicle that can travel using motive power of at least one of a motor and an engine, or an electrified vehicle that travels on drive power obtained by electric energy.

The vehicle 1 includes a vehicle main body 10, a charger 20 serving as a high-voltage unit, an electricity storage device 30 serving as a battery, a charging inlet 40, a first harness 50, a second harness 60, a front seat 70, and a rear seat 80. It is to be noted that the high-voltage unit is a device other than the electricity storage device 30. The high-voltage unit is mounted on a vehicle and is activated based on a high voltage.

The vehicle main body 10 includes a floor panel 300. The floor panel 300 configures a bottom portion of the vehicle main body 10. The front seat 70 and the rear seat 80 are disposed in a cabin of the vehicle 1. The front seat 70 and the rear seat 80 are disposed separately in a front-rear direction of the vehicle 1.

The front seat 70 includes a seat cushion 71 and a seatback 72. The seat cushion 71 configures a seating surface on which an occupant sits. The seatback 72 is connected to a rear portion of the seat cushion 71, and configures a backrest for the occupant sitting on the seat cushion 71. The seat cushion 71 is disposed above the floor panel 300. A space is provided between the seat cushion 71 and the floor panel 300.

The rear seat 80 includes a seat cushion 81 and a seatback 82. The seat cushion 81 configures a seating surface on which an occupant sits. The seatback 82 is connected to a rear portion of the seat cushion 81, and configures a backrest for the occupant sitting on the seat cushion 81. The seat cushion 81 is disposed above the floor panel 300. A space is provided between the seat cushion 81 and the floor panel 300.

The charger 20 is disposed in the space between the seat cushion 81 and the floor panel 300. The charger 20 is electrically connected to the electricity storage device 30 by the first harness 50. Further, the charger 20 is electrically connected to the charging inlet 40 by the second harness 60.

The charger 20 converts electric power supplied by the second harness 60 from an external power supply connected to the charging inlet 40 so as to be chargeable to the electricity storage device 30, and charges the electricity storage device 30. Specifically, for example, when the external power supply is an AC power supply, the charger 20 converts AC power supplied from the external power supply into DC power, and charges the electricity storage device 30 with the DC power.

The electricity storage device 30 is disposed in a space below a trunk that is a luggage mounting space provided in a rear portion of the vehicle 1. The electricity storage device 30 is disposed in an accommodating space positioned below a floor member of the trunk.

The electricity storage device 30 includes one or more electricity storage modules, a junction box, and an accommodating case. In the accommodating case, the one or more electricity storage modules and the junction box are accommodated.

Each electricity storage module is configured of a plurality of arrayed unit cells. The unit cell is a secondary battery, such as a nickel-metal hydride battery or a lithiumion battery. The unit cell may be one that uses a liquid electrolyte or may be one that uses a solid electrolyte. Further, a capacitor may be used in place of the unit cell.

The charging inlet 40 is provided at a power supply port of the vehicle 1. The charging inlet 40 is provided to allow insertion of a charging connector from the external power supply.

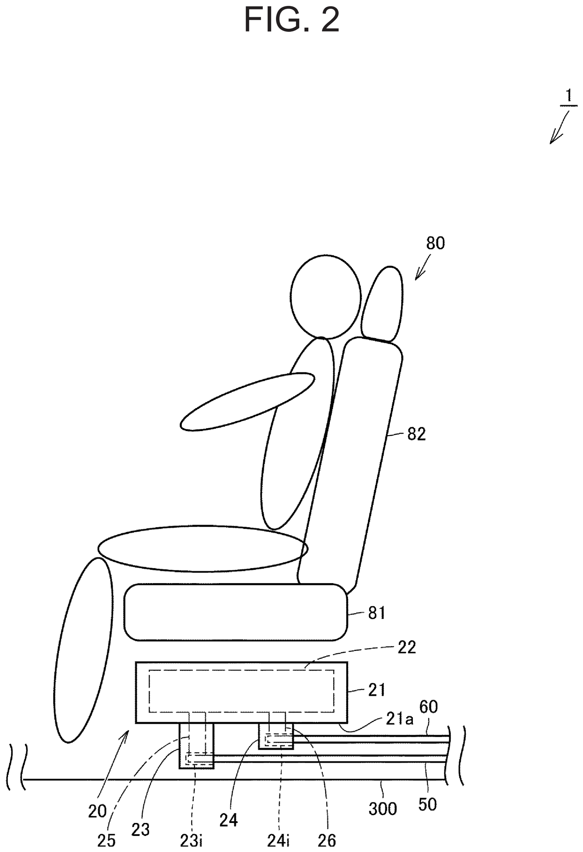

FIG. 2 is a view illustrating a configuration around the charger in the vehicle according to Embodiment 1. As illustrated in FIG. 2, the charger 20 includes a casing 21 and electric equipment 22 such as a charging circuit and a control device. The electric equipment 22 is accommodated in the casing 21.

The casing 21 is configured of an electromagnetic wave blocking member capable of blocking electromagnetic waves. As the electromagnetic wave blocking member, for example, a metal such as iron or an aluminum alloy can be adopted. The casing 21 has a lower surface 21a. The lower surface 21a of the casing 21 configures a lower surface of the charger 20.

On the lower surface 21a of the casing 21, a first high-voltage connector 23 and a second high-voltage connector 24 are provided. The first high-voltage connector 23 and the second high-voltage connector 24 protrude downward from the lower surface 21a.

The first high-voltage connector 23 and the second high-voltage connector 24 are further preferably disposed on the rear side of the lower surface 21a. This makes it possible to increase a distance between the high-voltage connector and a foot of an occupant, and hence transmission of electromagnetic waves to the foot side of the occupant can be reduced. Further, when there is a plurality of harnesses, a harness having a higher voltage is preferably disposed on the rear side of the lower surface 21a.

The first high-voltage connector 23 is electrically connected to the electric equipment 22 via an electrical path 25. The second high-voltage connector 24 is electrically connected to the electric equipment 22 via an electrical path 26.

The first high-voltage connector 23 is provided with a first insertion portion 23i. The first insertion portion 23i is directed in a direction orthogonal to the up-down direction. Specifically, the first insertion portion 23i is directed rearward, for example.

The first harness 50 extends between the charger 20 and the floor panel 300, and a distal end of the first harness 50 is inserted to the first insertion portion 23i. In this manner, the first harness 50 is connected to the first high-voltage connector 23. The first harness 50 extends along the floor panel 300 below the charger 20.

The second high-voltage connector 24 is provided with a second insertion portion 24i. The second insertion portion 24i is directed in a direction orthogonal to the up-down direction. Specifically, the second insertion portion 24i is directed rearward, for example.

The second harness 60 extends between the charger 20 and the floor panel 300, and a distal end of the second harness 60 is inserted to the second insertion portion 24i. In this manner, the second harness 60 is connected to the second high-voltage connector 24. The second harness 60 extends along the floor panel 300 below the charger 20.

As described above, in the vehicle according to Embodiment 1, the charger 20 having the high-voltage connector (for example, the first high-voltage connector 23 or the second high-voltage connector 24) provided on the lower surface side is disposed between the seat cushion 81 and the floor panel 300. In addition, on the lower side of the charger 20, the harness (for example, the first harness 50 or the second harness 60) is connected to the high-voltage connector.

In general, electromagnetic waves tend to easily leak from a connection portion between the harness and the charger 20 being the high-voltage unit.

To address this tendency, in this embodiment, as described above, the harness is connected to the high-voltage connector on the lower side of the charger 20. This makes it possible to block the electromagnetic waves leaking out from the connection portion with the charger 20 itself (more specifically, the casing 21 serving as an electromagnetic shield). This makes it possible to reduce the electromagnetic waves directed toward the seat cushion side.

Further, the high-voltage connector is provided on the lower surface side of the charger 20 separately from the seat cushion 81, and hence a space distance between the occupant siting on the seat cushion 81 and the high-voltage connector can be ensured.

Moreover, with the high-voltage connector being disposed as described above, the influence of the electromagnetic waves can be reduced by the charger 20 itself, and hence additional disposition of a blocking member that blocks the electromagnetic waves between the seat cushion 81 and the charger 20 can be omitted. This makes it possible to prevent enlargement of a space for installing a member.

Further, in this embodiment, the first insertion portion 23i and the second insertion portion 24i are directed in the direction orthogonal to the up-down direction (a height direction of the vehicle 1), and hence, below the charger 20, the distal end side of the harness is brought to a state of being inserted to the insertion portion in a state along the floor panel 300. Accordingly, even when it is difficult for an operator to put a hand into a gap between the floor panel 300 and the charger 20, with the charger 20 being disposed to the seat cushion 81 in a state in which the harness is connected to the charger 20, each member can be installed at an appropriate position. As described above, when it is difficult for the operator to put a hand into the gap between the floor panel 300 and the charger 20, the effect of being capable of preventing enlargement of the space is noticeably exerted as described above.

It is to be noted that, in the description above, a case in which the high-voltage unit is disposed between the seat cushion 81 and the floor panel 300 is exemplified, but this disclosure is not limited thereto. At least a part of the high-voltage unit is only required to be disposed between the seat cushion and the floor panel. For example, the high-voltage unit may extend rearward of the seat cushion.

### Embodiment 2

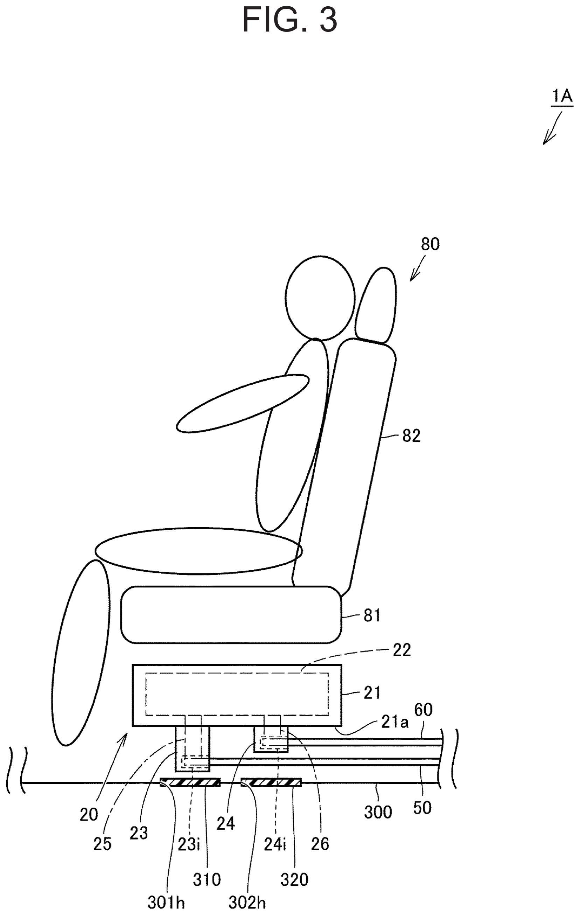

FIG. 3 is a view illustrating a configuration around a charger in a vehicle according to Embodiment 2. A vehicle 1A according to Embodiment 2 will be described with reference to FIG. 3.

As illustrated in FIG. 3, the vehicle 1A according to Embodiment 2 is different from the vehicle 1 according to Embodiment 1 in the configuration of the floor panel 300. The other components are almost the same.

The vehicle 1A according to Embodiment 2 includes a first sealing member 310 and a second sealing member 320. In the floor panel 300, a first hole portion 301h and a second hole portion 302h are provided in regions overlapping the first high-voltage connector 23 and the second high-voltage connector 24 in the up-down direction. The first hole portion 301h is provided below the first high-voltage connector 23, and is provided in a range wider than the first high-voltage connector 23. The second hole portion 302h is provided below the second high-voltage connector 24, and is provided in a range wider than the second high-voltage connector 24.

The first sealing member 310 seals the first hole portion 301h. The second sealing member 320 seals the second hole portion 302h. As each of the first sealing member 310 and the second sealing member 320, for example, a grommet can be adopted.

Even in the case of being configured as described above, the vehicle 1A according to Embodiment 2 can obtain effects substantially similar to those in the vehicle 1 according to Embodiment 1.

Moreover, with the first hole portion 301h and the second hole portion 302h being provided as described above, even when it is difficult for the operator to put a hand into a gap between the floor panel 300 and the charger 20, the operator can insert a hand from the first hole portion 301h or the second hole portion 302h. This makes it possible to reliably connect the charger 20 to the first harness 50 and the second harness 60.

Further, with the first hole portion 301h and the second hole portion 302h being sealed with the first sealing member 310 and the second sealing member 320, respectively, it is possible to reduce entry of foreign matters or liquid such as water from the first hole portion 301h and the second hole portion 302h into the vehicle cabin.

It is to be noted that, in the above-mentioned embodiment, a case in which the first hole portion 301h and the second hole portion 302h are provided for the first high-voltage connector 23 and the second high-voltage connector 24, respectively, is exemplified, but this disclosure is not limited thereto. A single hole portion may be provided to face both of the first high-voltage connector 23 and the second high-voltage connector 24.

### Embodiment 3

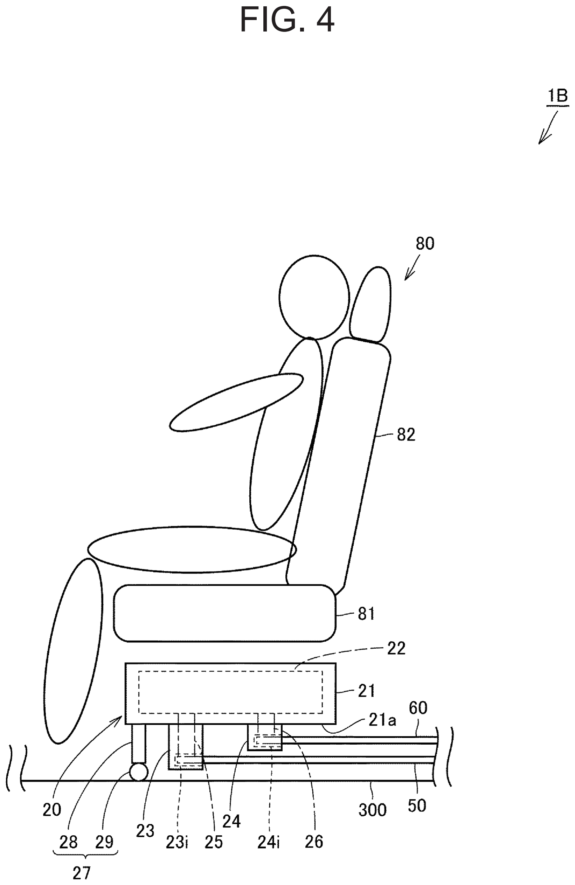

FIG. 4 is a view illustrating a configuration around a charger in a vehicle according to Embodiment 3. A vehicle 1B according to Embodiment 3 will be described with reference to FIG. 4.

As illustrated in FIG. 4, the vehicle 1B according to Embodiment 3 is different from the vehicle 1 according to Embodiment 1 in that the charger 20 is provided with a leg portion 27. The other components are almost the same.

The leg portion 27 is in contact with the floor panel 300 in a state of protruding downward of the first high-voltage connector 23 and the second high-voltage connector 24. The leg portion 27 may include a support portion 28 and a slide member 29. The support portion 28 extends in the up-down direction. The slide member 29 is fixed to a lower portion of the support portion 28. The slide member 29 is provided to be slidable relative to the floor panel 300.

In this case, even when it is difficult for an operator to put a hand into a gap between the floor panel 300 and the charger 20, in a state in which the harness is connected to the charger 20, it is possible to slide and move the charger 20 by the slide member 29 to install the charger 20 at an appropriate position. It is to be noted that a caster may be attached in place of the slide member 29, or the slide member 29 may be omitted as long as the support portion 28 protrudes downward of the first high-voltage connector 23 and the second high-voltage connector 24.

Even in the case of being configured as described above, the vehicle 1B according to Embodiment 3 can obtain effects substantially similar to those in Embodiment 1. Further, the leg portion 27 protrudes downward of the first high-voltage connector 23 and the second high-voltage connector 24, and hence the first high-voltage connector 23 and the second high-voltage connector 24 can be prevented from coming into contact with the floor panel 300. This makes it possible to protect the first high-voltage connector 23 and the second high-voltage connector 24.

### Embodiment 4

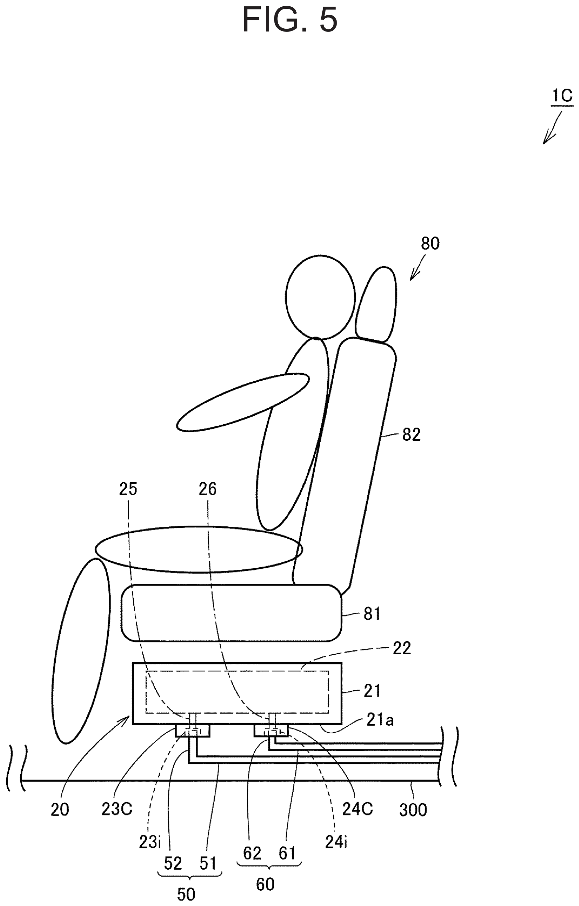

FIG. 5 is a view illustrating a configuration around a charger in a vehicle according to Embodiment 4. A vehicle 1C according to Embodiment 4 will be described with reference to FIG. 5.

As illustrated in FIG. 5, the vehicle 1C according to Embodiment 4 is different from the vehicle 1 according to Embodiment 1 mainly in configurations of a first high-voltage connector 23C and a second high-voltage connector 24C. The other components are almost the same.

In the first high-voltage connector 23C and the second high-voltage connector 24C, the first insertion portion 23i and the second insertion portion 24i are directed downward. Accordingly, on the lower side of the charger 20, the distal end side of the first harness 50 and the distal end side of the second harness 60 are brought to a state of being inserted to the first high-voltage connector 23C and the second high-voltage connector 24C in a state of being directed upward.

The first harness 50 includes a first extension portion 51 extending along the floor panel 300 below the charger 20, and a second extension portion 52 extending upward from the first extension portion 51 toward the first insertion portion 23i.

The second harness 60 includes a first extension portion 61 extending along the floor panel 300 below the charger 20, and a second extension portion 62 extending upward from the first extension portion 61 toward the second insertion portion 24i.

The first harness 50 and the second harness 60 are configured of, for example, pipe harnesses, and are each bent at substantially 90 degrees in a part of being switched from the second extension portion to the first extension portion.

Even in the case of being configured as described above, the vehicle 1C according to Embodiment 4 can obtain effects substantially similar to those in the vehicle 1 according to Embodiment 1.

### Embodiment 5

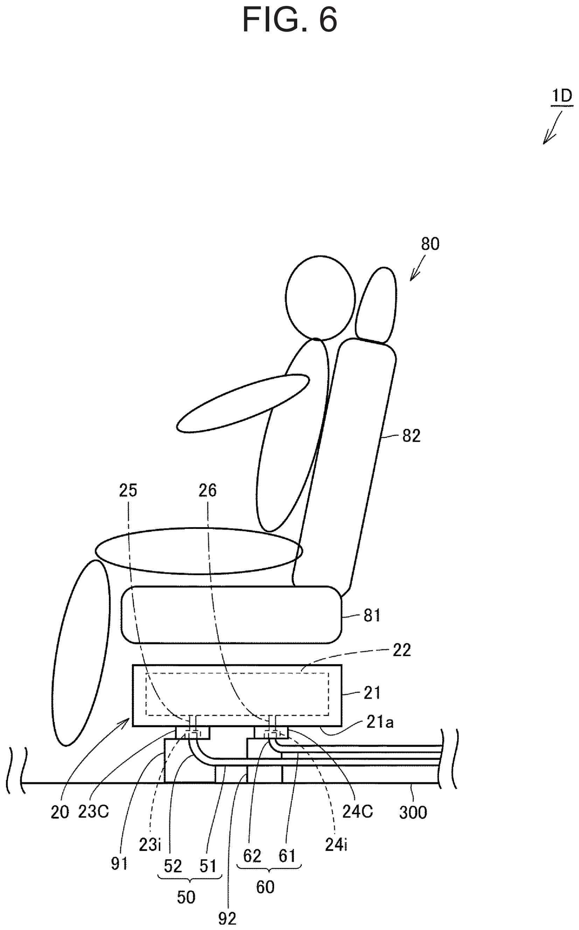

FIG. 6 is a view illustrating a configuration around a charger in a vehicle according to Embodiment 5. A vehicle 1D according to Embodiment 5 will be described with reference to FIG. 6.

As illustrated in FIG. 6, the vehicle 1D according to Embodiment 5 is different from the vehicle 1C according to Embodiment 4 in the configurations of the first harness 50 and the second harness 60 and in that a first posture support member 91 and a second posture support member 92 are included. The other components are almost the same.

The first posture support member 91 is disposed below the first high-voltage connector 23C. The first posture support member 91 stabilizes the posture of the second extension portion 52 of the first harness 50. The first posture support member 91 includes, for example, a curved surface directed upward as directed forward. The second extension portion 52 is supported by the curved surface. The first harness 50 is provided to be bendable and deformable.

The second posture support member 92 is disposed below the second high-voltage connector 24C. The second posture support member 92 stabilizes the posture of the second extension portion 62 of the second harness 60. The second posture support member 92 includes, for example, a curved surface directed upward as directed forward. The second extension portion 62 is supported by the curved surface. The second harness 60 is provided to be bendable and deformable.

At the time of mounting the charger 20, the charger 20 is installed in the vehicle cabin, and the first harness 50 is gradually moved toward the first posture support member 91. The shape of the distal end side of the first harness 50 is thus deformed along the curved surface. As a result, the first harness 50 can be connected to the first high-voltage connector 23C. Similarly, the second harness 60 is gradually moved toward the second posture support member 92. The shape of the distal end side of the second harness 60 is thus deformed along the curved surface. As a result, the second harness 60 can be connected to the second high-voltage connector 24C.

Even in the case of being configured as described above, the vehicle 1D according to Embodiment 5 can obtain effects substantially similar to those in the vehicle 1C according to Embodiment 4. Further, with the first posture support member 91 and the second posture support member 92, the postures of the second extension portion 52 of the first harness 50 and the second extension portion 62 of the second harness 60 are stabilized. This makes it possible to prevent the first harness 50 and the second harness 60 from dropping off from the first high-voltage connector 23C and the second high-voltage connector 24C.

### Embodiment 6

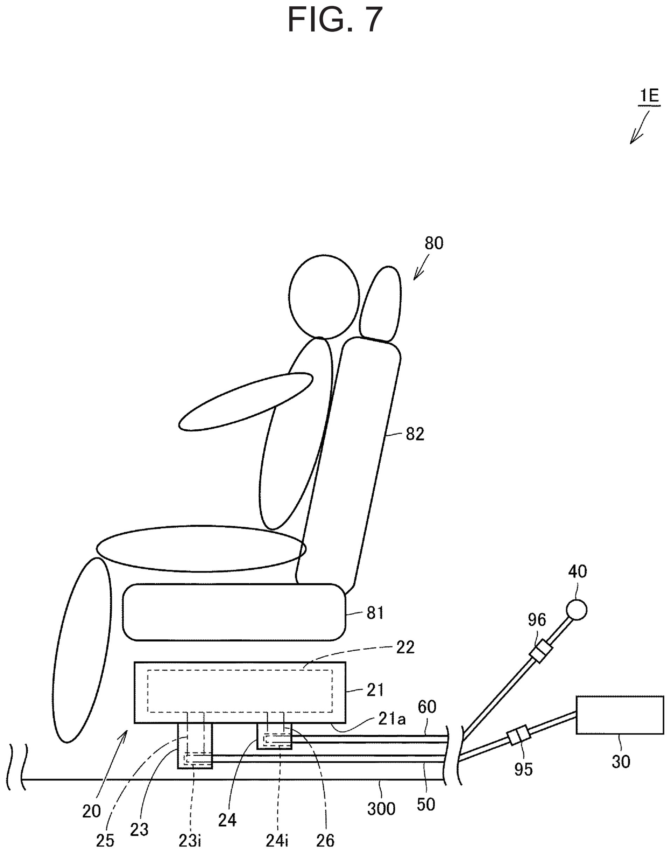

FIG. 7 is a view illustrating a configuration around a charger in a vehicle according to Embodiment 6. A vehicle 1E according to Embodiment 6 will be described with reference to FIG. 7.

As illustrated in FIG. 7, the vehicle 1E according to Embodiment 6 is different from the vehicle 1 according to Embodiment 1 in that a first relay connector 95 and a second relay connector 96 are provided on the first harness 50 and the second harness 60, respectively. The other components are almost the same.

In the first harness 50, the first relay connector 95 is provided at a position not overlapping the charger 20. The first relay connector 95 is provided to allow the first harness 50 to be separated into a part positioned on the charger 20 side and a part positioned on the electricity storage device 30 side.

**In** the second harness 60, the second relay connector 96 is provided at a position not overlapping the charger 20. The second relay connector 96 is provided to allow the second harness 60 to be separated into a part positioned on the charger 20 side and a part positioned on the charging inlet 40 side.

The electricity storage device 30 or the charging inlet 40 described above corresponds to a member electrically connected to the charger 20 serving as the high-voltage unit by the harness.

Even in the case of being configured as described above, the vehicle 1E according to Embodiment 6 can obtain effects substantially similar to those in the vehicle 1 according to Embodiment 1. Further, at the time of taking out the charger 20, the relay connector is removed to separate the part of the harness positioned on the charger 20 side and the part thereof positioned on the member (electricity storage device 30 and charging inlet 40) side. This makes it possible to integrally remove the charger 20, the high-voltage connector (the first high-voltage connector 23 and the second high-voltage connector 24), and a part of the harness (the first harness 50 and the second harness 60) positioned on the charger 20 side.

### Embodiment 7

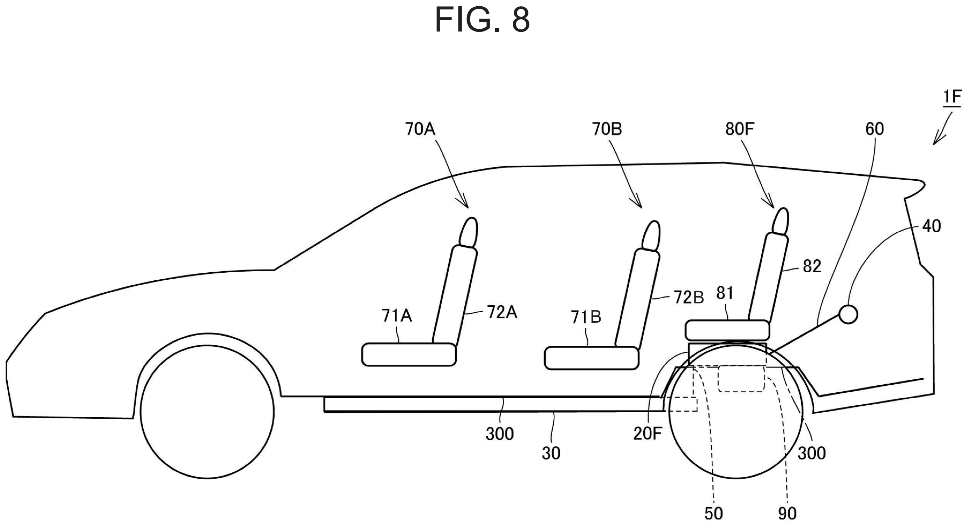

FIG. 8 is a schematic view of a vehicle according to Embodiment 7. A vehicle 1F according to Embodiment 7 will be described with reference to FIG. 8.

As illustrated in FIG. 8, the vehicle 1F according to Embodiment 7 is different from the vehicle 1 according to Embodiment 1 mainly in the configuration of the seat and the disposition of the electricity storage device 30 serving as a battery. The other components are almost the same.

The vehicle 1F includes a first row seat 70A and a second row seat 70B serving as a front-side seat, and a third row seat 80F serving as a rear-side seat. The first row seat 70A, the second row seat 70B, and the third row seat 80F are disposed at intervals in the front-rear direction of the vehicle.

The first row seat 70A includes a seat cushion 71A and a seatback 72A. The second row seat 70B includes a seat cushion 71B and a seatback 72B. The third row seat 80F includes a seat cushion 81 and a seatback 82. The seat cushions 71A, 71B correspond to a front-side seat cushion, and the seat cushion 81 corresponds to a rear-side seat cushion. Each of the seat cushions 71A, 71B, 81 is disposed above the floor panel 300.

A high-voltage unit 20F and a motor 90 are disposed below the seat cushion 81. The high-voltage unit 20F is a charger or an inverter. The high-voltage unit 20F is disposed between the floor panel 300 and the seat cushion 81. The motor 90 and a gear unit (not shown) are disposed below the high-voltage unit 20F. The motor 90 and the gear unit may be positioned below the floor panel 300.

The electricity storage device 30 is mainly disposed on the front side of the third row seat 80F. A rear end of the electricity storage device 30 may be positioned forward of the seat cushion 81, or may overlap a front part of the seat cushion 81. The electricity storage device 30 is disposed below the floor panel 300.

Below the floor panel 300, mounting components such as the electricity storage device 30, the motor 90, and the gear unit are collected. This makes it possible to reduce the influence of the electromagnetic waves to the seat cushion 81 side while saving space of the vehicle rear side.

The high-voltage unit 20F may be integrated with the motor 90 and the gear unit. In this case, the high-voltage unit 20F preferably extends in any one of front and rear directions of the vehicle relative to the motor 90 and the gear unit, and the high-voltage connector is preferably disposed in a part of the lower surface of the high-voltage unit 20F exposed from the motor 90 and the gear unit.

Moreover, the high-voltage unit 20F and the electricity storage device 30 may be disposed such that at least parts thereof overlap in the vertical up-down direction. Specifically, a front-side part of the high-voltage unit 20F and a rear-side part of the electricity storage device 30 may overlap in the up-down direction. In this case, the high-voltage connector is provided in a region of the lower surface of the high-voltage unit 20F that overlaps the electricity storage device 30 in the up-down direction. When the first harness 50 electrically connecting the high-voltage connector and the electricity storage device 30 is disposed below the overlapping region, further space saving can be achieved.

### Other Modifications

In Embodiments 1 to 7 described above, a case in which the charger 20 is disposed between the seat cushion 81 of the rear seat 80 and the floor panel 300 is exemplified, but this disclosure is not limited thereto. The charger 20 may be disposed between the seat cushion 71 of the front seat 70 and the floor panel 300.

Further, in Embodiments 1 to 7 described above, the charger 20 is exemplified and described as the high-voltage unit, but the high-voltage unit may be an inverter.

Further, in Embodiments 1 to 6 described above, a case in which the electricity storage device 30 is disposed below the trunk is exemplified and described, but this disclosure is not limited thereto. The electricity storage device 30 may be disposed forward of the rear seat 80. In this case, the high-voltage unit including the charger 20 may have at least a part disposed to the seat cushion 81 (rear-side cushion) of the rear seat 80, and the electricity storage device 30 may have at least a part disposed between the seat cushion 71 (front-side cushion) of the front seat 70 and the floor panel 300. It is to be noted that the floor panel 300 may be configured of an upper surface of the electricity storage device 30.

Further, the characteristic configurations described above in Embodiments 1 to 7 may be combined as appropriate without departing from the gist of this disclosure.

For example, the first hole portion 301h and the second hole portion 302h, and the first sealing member 310 and the second sealing member 320 according to Embodiment 2 may be applied to Embodiments 3 to 7. The leg portion 27 according to Embodiment 3 may be applied to Embodiments 2 and 4 to 7. The first high-voltage connector 23C and the second high-voltage connector 24C, and the connection shapes of the distal end portions (second extension portions 52, 62) of the first harness 50 and the second harness 60 according to Embodiment 4 may be applied to Embodiments 2, 3, 6, and 7.

The first posture support member 91 and the second posture support member 92 according to Embodiment 5 may be applied to Embodiment 4. In this case, the first posture support member 91 and the second posture support member 92 preferably have, instead of curved surfaces, bent surfaces that are each in contact with the second extension portion and the first extension portion and along the second extension portion and the first extension portion.

The first relay connector 95 and the second relay connector 96 according to Embodiment 6 may be applied to Embodiments 2 to 5 and 7.

The embodiments disclosed this time are in every respect illustrative and not restrictive. The scope of this disclosure is indicated by the claims and includes all changes within the meaning and the scope of equivalents of the claims.

## Claims

1. A vehicle (1) comprising:
a floor panel (300);
a seat cushion (81) disposed above the floor panel (300);
a high-voltage unit (20) excluding a battery (30);
a high-voltage connector (23) provided on the high-voltage unit (20); and
a harness (50), wherein:
the high-voltage unit (20) has at least a part disposed between the seat cushion (81) and the floor panel (300);
the high-voltage connector (23) is provided on a lower surface side of the high-voltage unit (20); and
the harness (50) extends toward a gap between the high-voltage unit (20) and the floor panel (300) to be connected to the high-voltage connector (23).

2. The vehicle (1) according to claim 1, wherein the high-voltage unit (20) is a charger (20) or an inverter.

3. The vehicle (1) according to claim 1, further comprising a sealing member that seals the hole portion, wherein the floor panel (300) has a hole portion provided in a region overlapping the high-voltage connector (23) in an up-down direction.

4. The vehicle (1) according to claim 1, wherein:
the high-voltage connector (23) includes an insertion portion to which the harness (50) is to be inserted; and
the insertion portion is directed in a direction orthogonal to an up-down direction.

5. The vehicle (1) according to claim 1, wherein:
the high-voltage connector (23) includes an insertion portion to which the harness (50) is to be inserted; and
the insertion portion is directed downward.

6. The vehicle (1) according to claim 5, wherein the harness (50) includes a first extension portion extending along the floor panel (300) below the high-voltage unit (20), and a second extension portion extending from the first extension portion upward toward the insertion portion.

7. The vehicle (1) according to claim 6, further comprising a posture support member (91, 92) that stabilizes a posture of the second extension portion.

8. The vehicle (1) according to any one of claims 1 to 7, further comprising a leg portion provided on the lower surface of the high-voltage unit (20), wherein the leg portion is in contact with the floor panel (300) in a state of protruding downward of the high-voltage connector (23).

9. The vehicle (1) according to any one of claims 1 to 7, further comprising a member electrically connected to the high-voltage unit (20) by the harness (50), wherein the harness (50) has a relay connector (95) provided at a position not overlapping the high-voltage unit (20), the relay connector (95) being configured to separate a part positioned on a high-voltage unit (20) side and a part positioned on a member side.

10. The vehicle (1) according to claim 1, further comprising the battery (30), wherein:
the seat cushion (81) further includes a front-side seat cushion (71) and a rear-side seat cushion (81);
the battery (30) is disposed below the front-side seat cushion (71); and
the high-voltage unit (20) is disposed between the rear-side seat cushion (81) and the floor panel (300).
